# EUROPÄISCHE PATENTSCHRIFT

(11) **EP 4 144 198 B1**
(45) Veröffentlichungstag und Bekanntmachung des Hinweises auf die Patenterteilung: **17.06.2026**
(21) Anmeldenummer: 22401020.7
(22) Anmeldetag: 29.08.2022
(51) Int. Cl.: A01C 7/20, A01C 7/08

(54) **LANDWIRTSCHAFTLICHE VERTEILMASCHINE ZUM AUSBRINGEN VON GRANULAREN MATERIALIEN AUF EINER LANDWIRTSCHAFTLICHEN NUTZFLÄCHE**
AGRICULTURAL DISTRIBUTOR FOR APPLYING GRANULAR MATERIALS TO AN AGRICULTURAL AREA
MACHINE DE DISTRIBUTION AGRICOLE POUR ÉPANDRE DES MATÉRIAUX GRANULAIRES SUR UNE SURFACE UTILE AGRICOLE

(30) Priorität: 06.09.2021 DE 102021122959
(43) Veröffentlichungstag der Anmeldung: 08.03.2023
(73) Patentinhaber: Amazonen-Werke H. Dreyer SE & Co. KG, 49205 Hasbergen (DE)
(72) Erfinder: Tröbner, Michael, 49076 Osnabrück (DE)

(56) Entgegenhaltungen:
- EP-A1- 1 782 669
- EP-A1- 2 025 215
- EP-B1- 2 717 667
- US-A1- 2010 078 185

## Beschreibung

Die Erfindung betrifft eine landwirtschaftliche Verteilmaschine zum Ausbringen von granularen Materialien auf einer landwirtschaftlichen Nutzfläche gemäß dem Oberbegriff des Patentanspruches 1 und ein Verfahren zum Betreiben einer landwirtschaftlichen Verteilmaschine gemäß dem Oberbegriff des Patentanspruches 10.

Auf dem Gebiet der Landwirtschaft sind eine Vielzahl von Varianten gezogener, angebauter und/oder selbstfahrender Verteilmaschinen bekannt. Hierzu zählen beispielsweise Sämaschinen, welche dazu geeignet sind, granulare Materialien, insbesondere Saatgut und/oder Dünger, auf der landwirtschaftlichen Nutzfläche auszubringen. Darüber hinaus weisen derartige Verteilmaschinen wenigstens eine Arbeitseinheit auf, welche wenigstens ein oder mehrere gegen den Boden der Nutzfläche andrückbare Bodenbearbeitungswerkzeuge umfasst. Derartige Bodenbearbeitungswerkzeuge sind typischerweise nach Art von Bodenbearbeitungswerkzeugen, insbesondere Scharen, ausgeführt, welche einzeln oder in Form von bis zu ganzen Scharfeldern an wenigstens einem, insbesondere verstellbaren, Maschinenrahmen der Verteilmaschine angelenkt und/oder angeordnet sind. Als mögliche Ausführungsformen für derartige Schare sind hier beispielhaft Zinken- und/oder Scheibenschare zu nennen. Darüber hinaus sind anstatt oder zusätzlich zu den Scharen auch Striegel-, Walzen- und/oder Fahrwerkskomponenten zur Bodendruckreduzierung, Bodenvergleichmäßigung oder dergleichen als Arbeitseinheiten, insbesondere Bodenbearbeitungswerkzeuge, denkbar.

Darüber hinaus weisen derartige Verteilmaschinen zumindest ein Gebläse zum pneumatischen Fördern der granularen Materialien aus wenigstens einem der Verteilmaschine zugeordneten Vorratsbehälter entlang wenigstens einer Förderleitung auf. Die granularen Materialien sind hierbei bedarfsgerecht zu wenigstens einer Arbeitseinheit zubringbar und im Bereich der Arbeitseinheit, insbesondere zugeordneter Bodenbearbeitungswerkzeuge, auf der Nutzfläche ausbringbar und/oder ablegbar.

Des Weiteren sind in der Vergangenheit auch Verteilmaschinen bekannt geworden, welche neben wenigstens einer ersten Arbeitseinheit noch wenigstens eine zweite Arbeitseinheit aufweisen, wobei insbesondere die wenigstens eine erste Arbeitseinheit nach Art eines Hauptscharfelds und die wenigstens eine zweite Arbeitseinheit nach Art eines, beispielsweise in Fahrtrichtung der Verteilmaschine und zu der ersten Arbeitseinheit vorlaufenden und/oder nachlaufenden, Zusatzscharfeids ausgeführt ist. Die wenigstens eine zweite Arbeitseinheit, insbesondere dessen Bodenbearbeitungswerkzeuge, können dabei je nach Ausführungsform am Maschinenrahmen, an einem dem Maschinenrahmen zugeordneten Zusatzrahmen und/oder an einem Heckkraftheber, angelenkt und/oder angeordnet sein.

Um die Arbeitseinheiten, insbesondere deren einzelnen Bodenbearbeitungswerkzeuge, während der Ausbringung bedarfsgerecht gegen und/oder in den Boden der Nutzfläche anzudrücken und/oder in unterschiedlichen Betriebsstellungen zu betreiben, weisen gattungsgemäße Verteilmaschinen eine entsprechende hydraulische und/oder pneumatische Einrichtung bzw. Hydraulik und/oder Pneumatik auf. Eine derartige Hydraulik und/oder Pneumatik ist beispielsweise aus dem Dokument US 2017/0215329 A1 bekannt. Demnach weist die Verteilmaschine wenigstens ein, insbesondere einstellbares bzw. schaltbares und/oder zugeordnetes, fluidisches erstes Steuergerät auf. Das wenigstens eine erste Steuergerät ist hierzu in der Regel mit einer der Verteilmaschine zugeordneten Druckversorgungseinrichtung, insbesondere einer Schlepperhydraulik, gekoppelt, durch die das für die Hydraulik und/oder Pneumatik benötigte Fluid mit anpassbarem bzw. einstellbarem Druck bereitgestellt wird. Ferner umfasst die Hydraulik und/oder Pneumatik fluidleitende Versorgungsleitungen bzw. ein Leitungskreislauf, über die das Fluid ausgehend von der Druckversorgungseinrichtung über das wenigstens eine erste Steuergerät zu den Arbeitseinheiten zubringbar ist.

Aus dem Stand der Technik sind hierbei unterschiedliche Ausführungsvarianten für derartige Verteilmaschinen bekannt geworden. Bei einer ersten, insbesondere einfach ausgeführten, Ausführungsvariante sind die unterschiedlichen Arbeitseinheiten, insbesondere Bodenbearbeitungswerkzeuge, über wenigstens ein gemeinsames, insbesondere erstes, Steuergerät mit der Druckversorgungseinrichtung gekoppelt und so, insbesondere gemeinsam, durch das Fluid mit dem notwendigen und/oder bedarfsgerechten Druck beaufschlagbar und/oder zwischen den unterschiedlichen Betriebsstellungen verstellbar.

Solche Verteilmaschinen sind während des Betriebs in unterschiedlichen Stellungen betreibbar. Beispiele hierfür sind unter anderem eine zumindest nahezu vollständig abgesenkte und/oder ausgeklappte Arbeitsstellung während der Ausbringung und/oder eine zumindest nahezu vollständig angehobene und/oder eingeklappte Vorgewende- und/oder Außerbetriebsstellung, insbesondere während Transport- und/oder Wendemanövern. Dementsprechend sind hierbei auch die Arbeitseinheiten mittels des Steuergeräts in die unterschiedlichen Betriebsstellungen verstellbar. Hierfür sind die Arbeitseinheiten je nach Ausführungsform, und insbesondere je nach Schaltzustand, des Steuergeräts in an sich bekannter Weise in abgesenkter und/oder gegen den Boden in angedrückter Schwimm- und/oder Arbeitsstellung und/oder einer angehobene bzw. ausgehobene Außerbetriebs- und/oder Transportstellung betreibbar.

Darüber hinaus sind auch komplexere und/oder flexiblere Verteilmaschinen bekannt geworden, bei denen zumindest zwei unterschiedlichen Arbeitseinheiten, insbesondere der ersten und zweiten Arbeitseinheit, jeweils eigene und/oder separate Steuergeräte zugeordnet sind. Hierbei ist die wenigstens eine erste Arbeitseinheit über wenigstens ein erstes Steuergerät und die wenigstens eine zweite Arbeitseinheit über wenigstens ein weiteres erstes Steuergerät, insbesondere in paralleler Art und Weise, mit der Druckversorgungeinrichtung, insbesondere der Schlepperhydraulik, gekoppelt. Somit ist hierbei das erste Steuergerät über wenigstens einen ersten Anschluss und das wenigstens eine weitere erste Steuergerät über wenigstens einen zweiten Anschluss mit der Druckversorgungseinrichtung, insbesondere der Schlepperhydraulik, fluidleitend verbunden.

Solche Verteilmaschinen erlauben es die unterschiedlichen Arbeitseinheiten während des Betriebs in bzw. mit unterschiedlichen und/oder voneinander abweichenden Betriebsstellungen und/oder Drücken zu betreiben. Somit kann während des Ausbringvorgangs beispielsweise das erste Steuergerät und damit die erste Arbeitseinheit in der sogenannten Schwimmstellung hydraulisch und/oder pneumatisch zumindest nahezu drucklos betrieben werden, während die zweite Arbeitseinheit mittels der Hydraulik und/oder Pneumatik, insbesondere über das weitere erste Steuergerät, mit Druck beaufschlagt gegen den Boden angedrückt wird. Ferner sind hierzu auch Verteilmaschinen bekannt geworden, bei denen der Aufbau des Drucks wenigstens einer der Arbeitseinheiten, insbesondere der zweiten Arbeitseinheit, zusätzlich durch eine Gebläsehydraulik und/oder ein zusätzliches Steuergerät des Gebläses realisiert ist. Für eine derartige Ausführungsform sei hier die EP 1 782 669 A1, EP 2 717 667 B1 oder die EP 2 025 215 A1 erwähnt.

Die bekannten Verteilmaschinen stellen somit stets einen Kompromiss zwischen der Komplexität und damit den Kosten und der Flexibilität der Verteilmaschine dar. Wird beispielsweise eine kostengünstige Verteilmaschine bevorzugt, weist diese in der Regel nur wenigstens ein gemeinsames Steuergerät für unterschiedliche Arbeitseinheiten auf, womit diese stets nur in zueinander gleichen bzw. übereinstimmenden Betriebsstellungen betreibbar sind. Ist eine hohe Flexibilität zwischen den Betriebsstellungen der unterschiedlichen Arbeitseinheiten gewünscht, werden hingegen eine Mehrzahl unterschiedlicher, insbesodnere erster, Steuergeräte eingesetzt, welche jeweils den jeweiligen Arbeitseinheiten zugeordnet sind und welche jeweils separat mit der Druckversorgungseinrichtung, insbesondere der Schlepperhydraulik, gekoppelt und/oder verbunden sind, was wiederrum zu verhältnismäßig besonders hohen Anschaffungskosten bzw. Herstellungskosten der Verteilmaschine führt. Besonders häufig tritt in der Praxis das Problem auf, dass die Anzahl zur Verfügung stehender Steuergeräte, insbesondere an der Druckversorgungseinrichtung, durch eine Vielzahl von Verbrauchern und/oder Arbeitseinheiten, wie beispielsweise Befüllschnecken, Spuranreißer, Stützfüße, Klappsicherungen und/oder Antriebe für Flüssigdüngerpumpen oder dergleichen, bereits belegt bzw. ausgeschöpft sind und weitere für den aktuellen Arbeitsvorgang eigentlich notwendige Arbeitseinheiten somit nicht mehr mit der Druckversorgungseinrichtung koppelbar sind. Darüber hinaus weist eine derartige Verteilmaschine mit einer Mehrzahl separater, insbesondere erster, Steuergeräte den Nachteil auf, dass die Bedienung, beispielsweise aus der Fahrkabine heraus, und/oder der Aufwand zum Koppeln der Steuergeräte und damit der unterschiedlichen Arbeitseinheiten mit der Druckversorgungseinrichtung, insbesondere der Schlepperhydraulik eines Zugfahrzeugs der Verteilmaschine, für einen Bediener besonders aufwendig ist. Weiterhin weisen derart aufgebaute Verteilmaschinen durch die höhere Anzahl an Verbindungen bzw. Anschlüssen zwischen der Druckversorgungseinrichtung und den Steuergeräten eine höhere Wahrscheinlichkeit für Leckagen für das hydraulische und/oder pneumatische Fluid auf.

Die der Erfindung zugrunde liegende Aufgabe besteht somit darin, eine Verteilmaschine so zu gestalten, dass die zuvor beschriebenen bzw. bisherigen Nachteile zumindest teilweise beseitigt sind. Insbesondere besteht die Aufgabe darin eine Verteilmaschine so zu gestalten, dass die Verteilmaschine besonders einfach ausgeführt und dabei besonders flexibel einsetzbar ist.

Diese Aufgabe wird erfindungsgemäß durch die Merkmale des Anspruch 1 gelöst.

In Folge dieser Maßnahme muss die wenigstens eine Steuereinheit nicht notwendigerweise separat und/oder zusätzlich mit der Druckversorgungseinrichtung gekoppelt werden. Stattdessen ist die Steuereinheit einerseits über das erste Steuergerät der ersten Arbeitseinheit und andererseits über das zusätzliche Steuergerät des Gebläses mit der Druckversorgungseinrichtung, insbesondere der Schlepperhydraulik, verbunden. Somit ist das Fluid über das erste und/oder das zusätzliche Steuergerät zur Steuereinheit zuleitbar. Die Steuereinheit ist bevorzugt dazu eingerichtet, das eingeleitete Fluid zum Betreiben und/oder Anpassen der Betriebsstellungen der zweiten Antriebseinheiten freizugeben und/oder zu sperren und insbesondere eine Durchflussmenge, Durchflussrichtung und/oder einen Durchflussdruck des eingeleiteten Fluids zu beeinflussen und/oder anzupassen. Die Betriebsstellung und/oder der Druck mit dem die zweite Arbeitseinheit gegen den Boden angedrückt wird, ist somit insbesondere abhängig von den Schaltzuständen und/oder einer Schaltkombination des ersten und des zusätzlichen Steuergeräts.

Im Folgenden ist unter der dem Begriff "Steuereinheit" eine aus einem oder mehreren fluidischen, insbesondere hydraulischen und/oder pneumatischen, Komponenten bzw. Elementen zusammengesetzte Baugruppe zu verstehen. Bei einer bevorzugten Ausführungsform mit mehreren Komponenten ist die Steuereinheit vorzugsweise nach Art eines geschlossenen Steuerblocks zu verstehen, bei welcher die mehreren Komponenten in den Steuerblock integriert sind. Ferner ist alternativ oder zusätzlich auch eine teilaufgelöste Steuereinheit denkbar, bei der einige Komponenten in einem ersten Steuerblock und weitere Komponenten in zumindest einem weiteren Steuerblock angeordnet sind. Des Weiteren ist auch eine alternative oder zusätzliche Ausführungsform denkbar, bei der die Steuereinheit vollständig aufgelöst ist und die Komponenten der Steuereinheit einzeln innerhalb der Hydraulik und/oder Pneumatik, insbesondere mittels Fluidleitungen, miteinander gekoppelt sind.

Diese Ausführungsform weist den entscheidenden Vorteil auf, dass die erste und zweite Arbeitseinheit trotz dem wenigstens einen vorgeschalteten und/oder gemeinsamen, insbesondere ersten, Steuergerät in zueinander unterschiedlichen Betriebsstellungen betreibbar sind und die Verteilmaschine somit trotz des einfachen Aufbaus besonders flexibel betreibbar ist. Beispielsweise kann hierdurch das Fluid im ersten Steuergerät und somit in der ersten Arbeitseinheit zumindest nahezu drucklos sein, während die zweite Arbeitseinheit über das zusätzliche Steuergerät des Gebläses mit einem entsprechenden Arbeitsdruck beaufschlagt wird.

Bevorzugt ist dabei auch der Maschinenrahmen mit der Hydraulik und/oder Pneumatik gekoppelt und zumindest teilweise, insbesondere sektionsweise zwischen einer Transport- und einer Arbeitsstellung, klappbar und/oder schwenkbar ausgeführt. Besonders bevorzugt ist das erste Steuergerät hierbei dem Maschinenrahmen zugeordnet und dazu eingerichtet, die Betriebsstellung des Maschinenrahmens anzupassen.

Erfindungsgemäß bezeichnen die Begriffe "fluidisches Steuergerät" und/oder "Steuergerät", sofern nicht anders explizit angegeben, jeweils ein aus der Hydraulik und/oder Pneumatik bekanntes hydraulisches und/oder pneumatisches Steuergerät und/oder Steuerventil, welches in der Landwirtschaft häufig auch als Hydrauliksteuergerät bezeichnet wird. Bevorzugt ist das Steuergerät mechanisch und/oder elektrisch umschaltbar ausgebildet. Besonders bevorzugt ist das Steuergerät dabei doppelt- oder einfachwirkend ausgeführt.

In einer bevorzugten Ausführungsform der erfindungsgemäßen Verteilmaschine umfasst die Steuereinheit wenigstens einen ersten Anschluss und wenigstens einen zweiten Anschluss, wobei der wenigstens eine erste Anschluss mit dem ersten Steuergerät und der wenigstens eine zweite Anschluss mit dem zusätzlichen Steuergerät fluidleitend verbindbar ist. Bevorzugt weist die Steuereinheit mehrere erste und/oder zweite Anschlüsse auf, wobei wenigstens einer der mehreren Anschlüsse zumindest überwiegend oder ausschließlich zum Einleiten des zubringbaren Fluids nach Art eines Zulaufs und wenigstens ein anderer der mehreren Anschlüsse zumindest überwiegend oder ausschließlich zum Ausleiten des zubringbaren Fluids nach Art eines Rücklaufs ausgebildet ist. Alternativ oder zusätzlich kann zwischen dem ersten oder dem zusätzlichen Steuergerät und der Steuereinheit nur ein erster oder zweiter Anschluss ausgebildet sein, wobei der wenigstens eine Anschluss sowohl zum Einleiten als auch zum Ausleiten des Fluids nutzbar ist.

Bevorzugt ist wenigstens einem oder mehreren Bodenbearbeitungswerkzeugen der ersten Arbeitseinheit wenigstens ein, insbesondere einfachwirkender oder doppelwirkender, Stellantrieb mit wenigstens einer mit dem Fluid beaufschlagbaren Stellseite zugeordnet. Der Stellantrieb ist dabei bevorzugt derart zwischen dem Maschinenrahmen und der ersten Arbeitseinheit, insbesondere dem Bodenbearbeitungswerkzeug, angeordnet, dass die Arbeitseinheit bei einer Druckbeaufschlagung der Stellseite mit Fluid zumindest teilweise in Richtung der Außerbetriebs- und/oder Transportstellung ausgehoben wird. Alternativ kann die Funktionsweise auch anders herum sein. Ist das Steuergerät in einer sogenannten Schwimmstellung geschaltet, ist das Fluid an der mit Druck beaufschlagbaren Stellseite zumindest teilweise und/oder nahezu drucklos. Die erste Arbeitseinheit ist bei einer zumindest teilweise und/oder zumindest nahezu drucklos beaufschlagten Stellseite, insbesondere aufgrund des Eigengewichts, bevorzugt dazu eingerichtet, in der Schwimmstellung betrieben und/oder entlang des Bodens geführt zu werden.

In einer bevorzugten Weiterbildung der erfindungsgemäßen Verteilmaschine ist wenigstens einem oder mehreren Bodenbearbeitungswerkzeugen der zweiten Arbeitseinheit wenigstens ein doppeltwirkender Stellantrieb mit unterschiedlichen Stellseiten zugeordnet, wobei eine erste Stellseite des jeweiligen Stellantriebs über das erste Steuergerät und eine zweite Stellseite des jeweiligen Stellantriebs, insbesondere alternativ oder zusätzlich, über die Steuereinheit mit Druck beaufschlagbar ist. Bevorzugt ist jede Stellseite des wenigstens einen Stellantriebs einer von zwei Verstellrichtungen des wenigstens einen oder der mehreren Bodenbearbeitungswerkzeuge zugeordnet. Besonders bevorzugt ist die erste Stellseite dabei als Ringkolbenfläche ausgeführt und bei einer Druckbeaufschlagung mittels des Fluids und einer positiven Druckdifferenz zur zweiten Stellseite dazu eingerichtet, den Stellantrieb zumindest teilweise einzufahren bzw. zusammenzufahren. Vorzugsweise wird hierdurch die zweite Arbeitseinheit, insbesondere deren Bodenbearbeitungswerkzeuge, vom Ackerboden, insbesondere in eine Außerbetriebs- bzw. Transportstellung, ausgehoben. Ferner bevorzugt ist die zweite Stellseite bei einer Druckbeaufschlagung mittels des Fluids und einer positiven Druckdifferenz zur ersten Stellseite dazu eingerichtet, den Stellantrieb zumindest teilweise auszufahren bzw. auseinanderzufahren. Hierdurch ist vorzugsweise die zweite Arbeitseinheit, insbesondere deren Bodenbearbeitungswerkzeuge, zum Ackerboden hin, insbesondere in eine Arbeitsstellung, absenkbar und/oder gegen den Boden andrückbar.

In einer anderen bevorzugten Ausführungsform der erfindungsgemäßen Verteilmaschine umfasst die Steuereinheit zum Ein- und/oder Ausleiten des Fluids wenigstens ein, insbesondere zwischen dem ersten und zweiten Anschluss angeordnetes, fluidisch selbstsperrendes erstes Hydraulikelement und wenigstens ein schaltbares zweites Hydraulikelement, wobei das erste und zweite Hydraulikelement jeweils betätigungsseitig vorzugsweise über wenigstens eine hydraulische Zusatzsteuerleitung, insbesondere Betätigungsleitung, miteinander gekoppelt und/oder, insbesondere dauerhaft, druck- und/oder fluidleitend miteinander verbunden sind. Hierbei ist das erste Hydraulikelement bevorzugt nach Art eines, insbesondere selbsttätig, entsperrbaren Federrückschlagventils ausgebildet, welches vorzugsweise bei einer betätigungsseitigen Druckbeaufschlagung in Sperrrichtung, insbesondere für den Durchfluss des Fluids, freigegeben ist. Das zweite Hydraulikelement ist ferner bevorzugt nach Art eines umschaltbaren Wegeventils ausgebildet. Darüber hinaus sind das erste und zweite Hydraulikelement bevorzugt fluidleitend miteinander verbunden.

In einer anderen Weiterbildung der erfindungsgemäßen Verteilmaschine umfasst die Steuereinheit zumindest ein, vorzugsweise zwischen dem zusätzlichen Steuergerät und dem schaltbaren zweiten Hydraulikelement angeordnetes, Druckregelventil bzw. Druckbegrenzungsventil, wobei der Druck an der zweiten Stellseite des wenigstens einen Stellantriebs, insbesondere alternativ oder zusätzlich, mittels des Druckregelventils bzw. Druckbegrenzungsventils einstellbar ist. Durch diese Maßnahme ist der Druck mit dem die zweite Stellseite des Stellantriebs beaufschlagbar und damit die Arbeitseinheit gegen den Boden andrückbar ist direkt und zusätzlich zum bereitsgestellten Druck der Druckversorgungseinrichtung beeinflussbar. Bei einer derartigen Ausführungsform ist die zweite Arbeitseinheit und damit die Verteilmaschine mit besonders hoher Flexibilität betreibbar.

In einer anderen bevorzugten Ausführungsform der erfindungsgemäßen Verteilmaschine umfasst die Steuereinheit zumindest ein erstes Rückschlagventil, welches bevorzugt in einer Förderrichtung des Fluids zwischen dem zweiten Anschluss und dem Druckregelventil der Steuereinheit angeordnet ist, und besonders bevorzugt zum Druckregelventil fluidisch parallel geschaltet ist, und welches insbesondere in Förderrichtung des Fluids selbstsperrend ist. Das erste Rückschlagventil ist insbesondere innerhalb eines zweiten Leitungskreislaufs, vorzugsweise zwischen einer Zuflussleitung aus dem zusätzlichen Steuergerät und einer Entlastungsleitung zu einem Fluidtank der Druckversorgungseinrichtung, angeordnet. Somit ist beispielsweise sichergestellt, dass das zumindest teilweise mit Druck beaufschlagte Fluid innerhalb der Steuereinheit stets über das parallel geschaltete Druckregelventil aus dem zweiten Anschluss der Steuereinheit geleitet wird, während bei einer zumindest nahezu druckentlasteten Steuereinheit zusätzliches Fluid für eine Schnellbefüllung durch das erste Rückschlagventil einleitbar ist. Somit ist die Steuereinheit zumindest zweitweise besonders schnell mit Fluid befüllbar.

In einer anderen Weiterbildung der erfindungsgemäßen Verteilmaschine umfasst die Steuereinheit zumindest ein zweites Rückschlagventil und zumindest ein Strömungsregelventil, welche in Förderrichtung zueinander in Reihe und zwischen dem zusätzlichen Steuergerät und dem zweiten Hydraulikelement angeordnet sind. Das Strömungsregelventil ist vorzugsweise einstellbar ausgebildet. Alternativ oder zusätzlich kann das Stromregelventil auch als Drossel, insbesondere Drosselblende, ausgebildet sein. Das zweite Rückschlagventil ist bevorzugt dazu eingerichtet, das Fluid aus dem zusätzlichen Steuergerät kommend passieren zu lassen und/oder das Fluid aus und/oder durch den ersten Anschluss der Steuereinheit kommend zu sperren. Somit ist unter anderem sichergestellt, dass bei einer Druckbeaufschlagung der Steuereinheit durch den ersten Anschluss, zumindest nahezu kein Fluid über den zweiten Anschluss zum zusätzlichen Steuergerät durchgeleitet werden kann. Gleichzeitig kann dadurch jedoch bei einer Druckbeaufschlagung durch das zweite Steuergerät somit zumindest ein Teilstrom des zum Gebläse geförderten Fluids abgezweigt werden und beispielsweise für Druckschwankungen des Stellantriebs an der zweiten Antriebseinheit zur zweiten Stellseite geleitet werden.

In einer weiteren anderen bevorzugten Ausführungsform der erfindungsgemäßen Verteilmaschine umfasst die Steuereinheit zumindest ein drittes Rückschlagventil, welches in Förderrichtung zwischen dem ersten und zweiten Anschluss und zusätzlich zum zweiten Hydraulikelement fluidisch parallel angeordnet ist, wobei das dritte Rückschlagventil vorzugsweise dazu eingerichtet ist, das Fluid von der zweiten Stellseite des Stellantriebs und/oder dem ersten Anschluss zum zweiten Anschluss und/oder zur Druckversorgungseinrichtung hin passieren zu lassen, während ein Druchfluss des Fluids durch das zweite Hydraulikelement hindurch gesperrt ist. Somit ist das über das erste Steuergerät zugebrachte Fluid und/oder der von der Druckversorgungseinrichtung eingestellte Druck des Fluids bevorzugt über das Druckregelventil bzw. Druckbegrenzungsventil der Steuereinheit zusätzlich beeinflussbar und/oder anpassbar, womit der Druck für die zweite Stellseite der zweiten Arbeitseinheit besonders individuell anpassbar ist.

In einer weiteren bevorzugten Ausführungsform der erfindungsgemäßen Verteilmaschine ist die Steuereinheit je nach einem Schaltzustand des ersten Steuergeräts und/oder der Steuereinheit entweder über das erste oder zusätzliche Steuergerät mit einem hydraulischem Fluid befüllbar und/oder beaufschlagbar. Für eine bevorzugte und sogenannte Schnellbefüllung der Steuereinheit und/oder der zweiten Stellseite des Stellantriebs ist das Fluid zumindest zweitweise sowohl über das erste Steuergerät als auch das zusätzliche Steuergerät gemeinsam mit Fluid befüllbar und/oder beaufschlagbar. Durch eine derartige Ausführungsform ist die zweite Stellseite des Stellantriebs mit dem benötigten bzw. bedarfsgerechten Druck in besonders kurzer Zeit beaufschlagbar, womit die zweite Arbeitseinheit besonders schnell in die Arbeitsstellung absenkbar ist.

Die der Erfindung zugrunde liegende Aufgabe wird ebenso mit einem Verfahren zum Betreiben einer landwirtschaftlichen Verteilmaschine nach der eingangs genannten Art gelöst, wobei der zweiten Arbeitseinheit wenigstens eine fluidische, insbesondere hydraulische und/oder pneumatische, Steuereinheit zugeordnet ist, welche entlang des wenigstens einen Leitungskreislaufs, insbesondere in Förder- bzw. Durchflussrichtung des Fluids, dem ersten und/oder zusätzlichen Steuergerät nachgeordnet ist, wobei das Fluid zumindest teilweise über das erste Steuergerät zur Steuereinheit zubringbar ist und die erste und zweite Arbeitseinheit in zueinander unterschiedlichen Betriebsstellungen betrieben werden. Hinsichtlich der Vorteile und Modifikationen des erfindungsgemäßen Verfahrens wird zunächst auf die Vorteile und Modifikationen der erfindungsgemäßen Verteilmaschine verwiesen.

Erfindungsgemäß ist die Steuereinheit hierbei einerseits mit dem ersten Steuergerät und andererseits mit dem zusätzlichen Steuergerät fluidleitend verbunden.

Weitere Einzelheiten der Erfindung sind der Beispielsbeschreibung und den Zeichnungen zu entnehmen. Die Zeichnungen zeigen
- Fig.1: eine als Direktsämaschine ausgebildete landwirtschaftliche Verteilmaschine in einer Seitenansicht und in Prinzipdarstellung;
- Fig.2: einen erfindungsgemäßen hydraulischen und/oder pneumatischen Schaltplan der Verteilmaschine aus der Fig.1; und
- Fig.3: ein hydraulischer und/oder pneumatischer Schaltplan für eine weiteres Ausführungsbeispiel einer erfindungsgemäßen Steuereinheit.

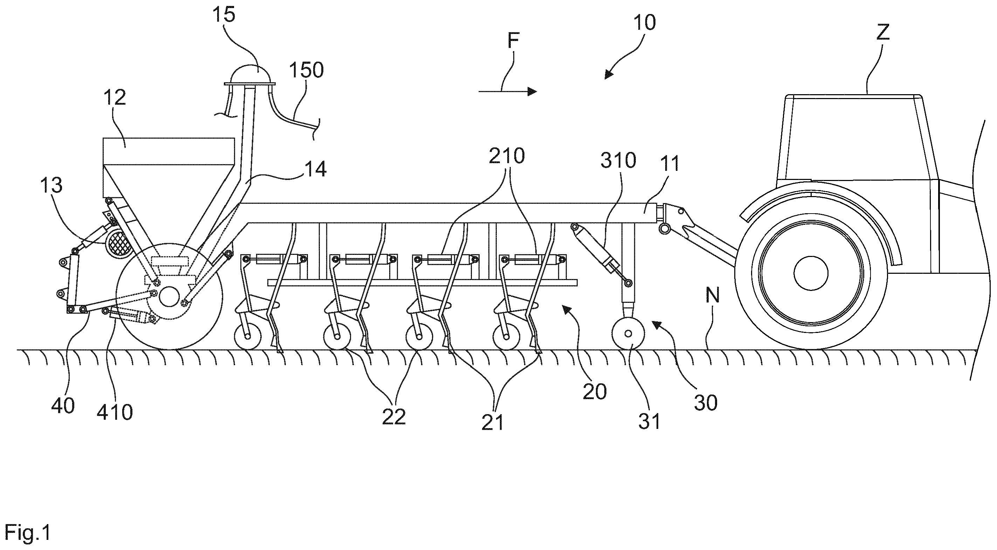

Eine von einem Zugfahrzeug Z, insbesondere Schlepper, gezogene und als Sämaschine ausgebildete landwirtschaftliche Verteilmaschine 10 zum Ausbringen von granularem Material ist in einer abgesenkten Arbeitsstellung in der Fig.1 gezeigt. Die Verteilmaschine 10 weist einen Maschinenrahmen 11 auf, an dessen hinteren Ende ein Vorratsbehälter 12 zum Vorhalten des granularen Materials angeordnet ist. In einer Fahrtrichtung F bzw. Arbeitsrichtung der Verteilmaschine 10 gesehen, ist hinter dem Vorratsbehälter 12 ein Gebläse 13 zu sehen, mittels dem das aus dem Vorratsbehälter 12 bedarfsgerecht ausgeschleuste granulare Material während der Ausbringung pneumatisch entlang einer Förderleitung 14 gefördert werden kann. Die Förderleitung 14 mündet in einer als Verteilerkopf ausgebildeten Verteileinrichtung 15, welche eine Vielzahl von daran angeschlossenen Ausbringleitungen 150 aufweist.

In Fahrtrichtung F vor dem Vorratsbehälter 12 weist die Verteilmaschine 10 eine erste und zweite Arbeitseinheit 20, 30 auf, welche jeweils eine Mehrzahl von Bodenbearbeitungswerkzeugen 21, 31 umfassen und welche am Maschinerahmen 11 angeordnet und/oder angelenkt sind. Die Arbeitseinheiten 20, 30, insbesondere deren Bodenbearbeitungswerkzeuge 21, 31, befinden sich während der Arbeitsstellung und/oder dem Ausbringvorgang zumindest teilweise im Eingriff mit dem Boden N. Des Weiteren ist den Arbeitseinheiten 20, 30, insbesondere den jeweiligen Bodenbearbeitungswerkzeugen 21, 31, jeweils mindestens eine der Ausbringleitungen 150 zugeordnet, welche für eine bessere Übersichtlichkeit in den Figuren nur teilweise angedeutet sind. Das granulare Material ist damit ausgehend von der Verteileinrichtung 15 über die Ausbringleitungen 150 zu den jeweiligen Arbeitseinheiten 20, 30, insbesondere Bodenbearbeitungswerkzeugen 21, 31, zubringbar und auf dem Boden der Nutzfläche N ablegbar.

In einer zur gezeigten alternativ Ausführungsform kann die Verteilmaschine 10 auch alternativ oder zusätzlich ein fluidleitendes, insbesondere flüssigkeitsleitendes, Bereitstellungssystem, insbesondere zumindest einen Flüssigkeitsbehälter und fluidleitende Zubringleitungen, umfassen, über welches zumindest ein flüssiges Material, insbesondere nach Art von Flüssigdünger, zu zumindest einer der Arbeitseinheiten 20, 30 zubringbar und auf der Nutzfläche ausbringbar ist. Insbesondere kann das flüssige Material hierbei je nach Ausführungsform im Bereich der Bodenbearbeitungswerkzeugen 21 der ersten Arbeitseinheit 20 oder der Bodenbearbeitungswerkzeugen 31 der zweiten Arbeitseinheit 30 ausbringbar sein.

Darüber hinaus ist in der Fig.1 ebenfalls zu sehen, dass die erste Arbeitseinheit 20, insbesondere die Bodenbearbeitungswerkzeuge 21, jeweils ein Schar, insbesondere Zinkenschar, und wenigstens eine nachlaufende Tiefenführungsrolle 22 umfassen. Alternativ dazu können die Bodenbearbeitungswerkzeuge 21 auch mehrere Tiefenführungsrollen 22 umfassen die einem gemeinsamen Schar zugeordnet sind. Weiterhin sind anstatt der wenigstens einen Tiefenführungsrolle 22 auch Andruckrollen oder dergleichen denkbar. Die erste Arbeitseinheit 20 ist hierbei durch die Mehrzahl in und quer zur Fahrtrichtung F nebeneinander angeordneter Bodenbearbeitungswerkzeuge 21 nach Art eines Scharfelds ausgeführt. Des Weiteren ist in Fahrtrichtung F vor der ersten Arbeitseinheit 20 eine als Schar 31, insbesondere Scheibenschar bzw. als Schneidscheibe, ausgeführte zweite Arbeitseinheit 30 zu erkennen. Die zweite Arbeitseinheit 30 umfasst hier ebenfalls eine Mehrzahl quer zur Fahrtrichtung F nebeneinander angeordneter Bodenbearbeitungswerkzeuge 31, insbesondere Schare, welche nach Art eines zur ersten Arbeitseinheit 20 vorlaufenden Scharfelds ausgeführt sind. Alternativ zur gezeigten Ausführungsform kann die zweite Arbeitseinheit 30 auch als nachlaufendes Scharfeld ausgeführt oder zwischen zwei Reihen von Bodenbearbeitungswerkzeugen 21 der ersten Arbeitseinheit 20 angeordnet sein. Weiterhin kann die zweite Arbeitseinheit 30 alternativ oder zusätzlich auch als Striegel-, Walzen- und/oder Fahrwerkskomponente ausgebildet sein und/oder an einem Heckkraftheber angeordnet sein.

Sowohl die erste als auch die zweite Arbeitseinheit 20, 30, insbesondere deren Bodenbearbeitungswerkzeuge 21, 31, sind je nach Bedarf in unterschiedlichen Betriebsstellungen betreibbar. Die Arbeitseinheiten 20, 30 können beispielsweise für eine Transport- oder Vorgewendestellung vom Boden angehoben bzw. ausgehoben werden, während die Arbeitseinheiten 20, 30 für die Ausbringung bzw. die Bearbeitung des Bodens N abgesenkt werden können. Während einer abgesenkten Betriebsstellung sind die Arbeitseinheiten 20, 30, insbesondere deren Bodenbearbeitungswerkzeuge 21, 31, hierbei mit einstellbarem Druck gegen den Boden N andrückbar. Die Verstellung der Betriebsstellungen und/oder die Einstellung des jeweiligen Drucks zwischen den Arbeitseinheiten 20, 30 und dem Boden N wird zumindest im Wesentlichen durch den Arbeitseinheiten 20, 30, insbesondere Bodenbearbeitungswerkzeuge 21, 31, zugeordnete Stellantriebe 210, 310 realisiert. Die Stellantriebe 210, 310 sind zwischen den jeweiligen Arbeitseinheiten 20, 30 und dem Maschinenrahmen 11 angeordnet und werden je nach Ausführungsvariante hydraulisch und/oder pneumatisch betrieben. Die Funktionsweise der Stellantriebe 210, 310 wird nachfolgend näher erläutert.

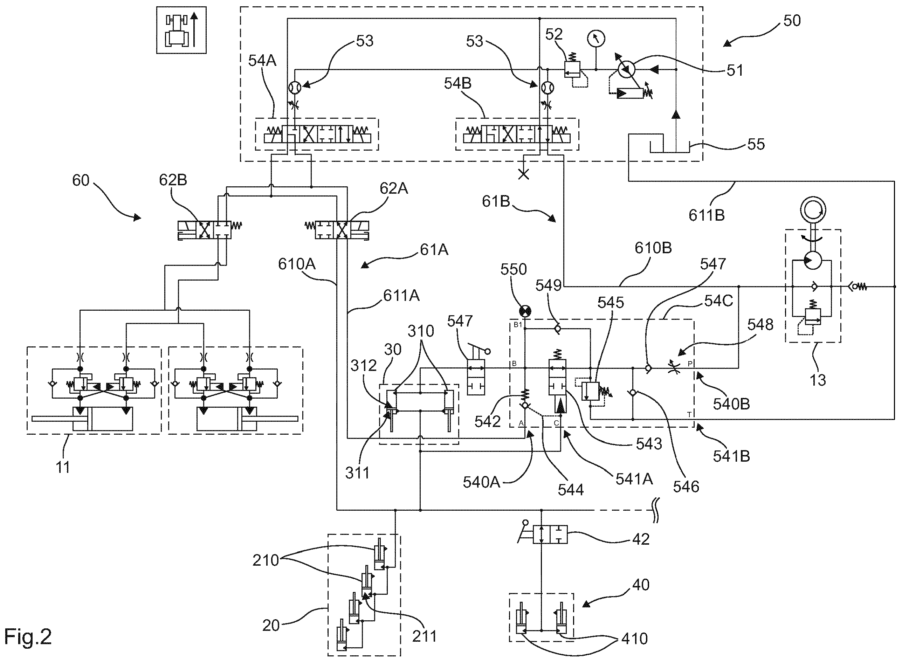

In der Fig.2 ist ein entsprechender in Arbeitsstellung befindlicher hydraulischer und/oder pneumatischer Schaltplan gezeigt. Im oberen Teil des Schaltplans ist eine Druckversorgungseinrichtung 50 zu erkennen, welche dazu eingerichtet ist, das hydraulische und/oder pneumatische Fluid für die Arbeitseinheiten 20, 30, insbesondere die zugeordneten Stellantriebe 210, 310, 410, bereitzustellen und/oder das Fluid zumindest teilweise zu fördern. Die dargestellte Druckversorgungseinrichtung 50 ist beispielhaft als Schlepperhydraulik ausgeführt, welche am Zugfahrzeug Z angeordnet ist. Alternativ oder zusätzlich zur gezeigten Ausführungsform, kann die Druckversorgungseinrichtung 50 auch an der Verteilmaschine 10 selbst angeordnet sein. Die Druckversorgungseinrichtung 50 umfasst zur Ausführung ihrer Funktionen zumindest eine Druckerzeugungs- und/oder Fördervorrichtung 51, insbesondere Pumpe, zumindest eine erste Druckbegrenzungseinrichtung 52, insbesondere ein erstes Druckbegrenzungsventil, und zumindest eine Durchflussmess- und/oder Druchflussregeleinrichtung 53, insbesondere ein Stromregel- und/oder - drosselventil. Darüber hinaus ist innerhalb der Druckversorgungseinrichtung 50 zumindest ein der ersten Arbeitseinheit 20 zugeordnetes erstes Steuergerät 54A und zumindest einem dem Gebläse 13 zugeordnetes zusätzliches Steuergerät 54B angeordnet, welches insbesondere als umschaltbares Wegeventil ausgeführt ist. Alternativ oder zusätzlich zur gezeigten Ausführungsvariante, könnte das erste und/oder zusätzliche Steuergerät 54A, 54B auch außerhalb der Druckversorgungseinrichtung 50 angeordnet sein. Das jeweilige Steuergerät 54A, 54B ist hierbei dazu eingerichtet, das Fluid für die entsprechenden zugeordneten Arbeitseinheiten 20, 30, insbesondere die Stellantriebe 210, 310, bzw. das Gebläse 13 freizugeben und/oder zu sperren bzw. zu steuern und/oder zu regeln.

Unterhalb der Druckversorgungseinrichtung 50 ist eine hydraulische und/oder pneumatische Einrichtung 60 der Verteilmaschine 10 zu sehen, welche wenigstens einen Leitungskreislauf 61A, 61B für das Fluid umfasst. Die Verteilmaschine 10 ist demnach über die hydraulische und/oder pneumatische Einrichtung 60, insbesondere den jeweiligen Leitungskreislauf 61A, 61B, fluidleitend mit dem zugeordneten Steuergerät 54A, 54B und damit mit der Druckversorgungseinrichtung 50 verbunden. Die gezeigte Ausführungsvariante umfasst insbesondere einen ersten Leitungskreislauf 61A, welcher wenigstens eine erste und zweite Fluidleitung 610A, 611A aufweist, die mit dem ersten Steuergerät 54A verbunden sind. Die hydraulische und/oder pneumatische Einrichtung 60 weist hierbei ferner wenigstens ein, insbesondere optionales, betätigbares erstes und zweites Steuerventil 62A, 62B auf, welche entlang dem ersten Leitungskreislauf 61A, insbesondere der ersten und zweiten Fluidleitung 610A, 611A, angeordnet und somit dem ersten Steuergerät 54A nachgeordnet sind. Das erste Steuerventil 62A ist dabei der ersten und/oder zweiten Arbeitseinheit 20, 30 zugeordnet, während das zweite Steuerventil 62B beispielhaft wenigstens einem, insbesondere klappbaren und/oder quer zur Fahrtrichtung ausgerichteten, Teil des Maschinenrahmens 11 zugeordnet ist. Alternativ oder zusätzlich kann das zweite Steuerventil 62B aber auch anderen hydraulischen und/oder pneumatischen Aggregaten der Verteilmaschine 10 zugeordnet sein.

Des Weiteren umfasst die dargestellte Ausführungsvariante zumindest einen zweiten Leitungskreislauf 61B, welcher wenigstens eine dritte und vierte Fluidleitung 610B, 611B aufweist, die mit dem zusätzlichen Steuergerät 54B verbunden sind. Die dritte Fluidleitung 610 ist hierbei nach Art eines Vorlaufs ausgeführt und zum Zubringen des Fluids zum Gebläse 13 vorgesehen, während die vierte Fluidleitung 611B nach Art eines Rücklaufs zum Zurückleiten von Fluid zur Druckversorgungseinrichtung 50, insbesondere einem Fluidtank 55, ausgeführt ist.

Somit ist das Fluid zum Betreiben und/oder Anpassen der Betriebsstellungen der Arbeitseinheiten 20, 30 und/oder des Gebläses 13 über die hydraulische und/oder pneumatische Einrichtung 60 und über die jeweils zugeordneten Steuergeräte 54A, 54B zu den jeweiligen Arbeitseinheiten 20, 30 und zum Gebläse 13 zubringbar.

Entlang des ersten Leitungskreislaufs 61A, insbesondere der ersten Fluidleitung 610A, sind weiterhin die Stellantriebe 210 der ersten Arbeitseinheit 20 und die Stellantriebe 310 der zweiten Arbeitseinheit 30 angeschlossen. Ferner ist auch wenigstens ein mit dem ersten Leitungskreislauf 61A optional verbundener zusätzlicher Stellantrieb 410 zu sehen, welcher beispielhaft für ein hydraulisch und/oder pneumatisch betreibbares Aggregat 40 nach Art eines Heckkrafthebers oder dergleichen vorgesehen sein kann. Dem Aggregat 40, insbesondere den zusätzlichen Stellantrieben 410, kann auch ein optionales, insbesondere handbetätigtes, Schaltventil 42 zugeordnet sein, über welches ein zusätzliches händisches Zu- bzw. Abschalten des Aggregates 40 ermöglicht ist. Darüber hinaus kann alternativ auch die zweite Arbeitseinheit 30 selbst nach Art eines Heckkrafthebers 40 ausgebildet sein oder alternativ wenigstens einer der Stellantriebe 310 dem Heckkraftheber 40 zugeordnet sein. Die dargestellten Stellantriebe 210, 310, 410 sind hierbei nach Art von hydraulischen und/oder pneumatischen Stellzylindern, insbesondere Linearaktoren, ausgeführt. Die Stellantriebe 210 der ersten Arbeitseinheit 20 sind insbesondere als einfachwirkende Zylinder mit einseitiger hydraulischer und/oder pneumatischer Betätigung ausgeführt, während die Stellantriebe 310 der zweiten Arbeitseinheit 30 insbesondere als doppeltwirkende Zylinder mit beidseitiger hydraulischer und/oder pneumatischer Betätigung ausgebildet sind. Somit weisen die Stellantriebe 210 der ersten Arbeitseinheit 20 nur eine einzige mit dem Fluidkreislauf 61A verbundene Stellseite 211 und die Stellantriebe 310 der zweiten Arbeitseinheit 20 zwei unterschiedliche mit dem Fluidkreislauf 61A verbundene Stellseiten 311, 312 auf, wobei eine erste Stellseite 311 der Stellantriebe 310 über die erste Fluidleitung 610A des Leitungskreislaufs 61A gleichzeitig mit dem ersten Steuergerät 54A und den Stellantrieben 210, insbesondere der Stellseite 211, der ersten Arbeitseinheit 20 verbunden ist. Demnach weisen die Stellseiten 211 der ersten Arbeitseinheiten 20 und die erste Stellseite 311 der zweiten Arbeitseinheit 30 stets zumindest in etwa das gleiche Druckniveau auf.

Die Beaufschlagung der Stellantriebe 210 der ersten Arbeitseinheit 20 mit Druck bewirkt demnach ein von der Größe des Drucks abhängiges zumindest teilweises Ausheben der Arbeitseinheit 20, insbesondere der Bodenbearbeitungswerkzeuge 21, vom Boden N. Somit ist die erste Arbeitseinheit 20 in eine Nichtarbeitsstellung aushebbar. Darüber hinaus weist das erste Steuergerät 54 einen Schaltzustand, welcher in der Fig.2 gezeigt ist, bei dem das Fluid innerhalb des ersten Leitungskreislaufs 61A, insbesondere der ersten Fluidleitung 610A, druckentlastet und somit zumindest nahezu drucklos ist. Diese Stellung des Steuergeräts 54A wird als sogenannte Schwimmstellung bezeichnet. Ist die erste Fluidleitung 610A zumindest nahezu drucklos, kann sich die erste Arbeitseinheit 20 hierbei relativ zum Maschinenrahmen 11 in vertikaler Richtung gesehen zumindest teilweise frei bewegen, um beispielsweise einer unebenen oder hügeligen Bodenoberfläche folgen zu können. Während dessen liegt zwischen dem Boden N und dem Bodenbearbeitungswerkzeug 21, insbesondere den Tiefenführungsrollen 22, eine zumindest im Wesentlichen in vertikaler Richtung gerichtete Stützkraft an, welche zumindest in etwa dem Eigengewicht der ersten Arbeitseinheit 20, insbesondere der Bodenbearbeitungswerkzeuge 21, und/oder zusätzlich einer optionalen Vorspannungskraft, beispielsweise einer der ersten Arbeitseinheit optional zugeordneten Andruckfeder, entspricht. Gleichzeitig ist durch eine druckentlastete bzw. zumindest nahezu drucklose erste Fluidleitung 610A erreicht, dass während dessen die Stellantriebe 310 der zweiten Arbeitseinheit 30 zumindest nahezu vollständig ausfahren können und die zweite Arbeitseinheit 30 selbst abgesenkt bzw. mit dem Boden N in Eingriff bringbar ist.

Ebenfalls im Schaltplan zu sehen, ist zwischen dem ersten und zweiten Leitungskreislauf 61A, 61B eine der zweiten Arbeitseinheit 30 zugeordnete Steuereinheit 54C angeordnet. Die Steuereinheit 54C ist insbesondere außerhalb der Druckversorgungseinrichtung 54 in der hydraulischen und/oder pneumatischen Einrichtung 60 der Verteilmaschine 10 angeordnet bzw. integriert. Ferner ist die Steuereinheit 54C hierbei entlang des wenigstens ersten Leitungskreislaufs 61A dem ersten Steuergerät 54A nachgeordnet, so dass das Fluid zumindest teilweise über das erste Steuergerät 54A zur Steuereinheit 54C zubringbar ist. Anders herum kann das Fluid auch zumindest teilweise von der Steuereinheit 54C über das erste Steuergerät 54A zur Druckversorgungseinrichtung 50, insbesondere zum Fluidtank 55, zurückgeführt werden.

Die Steuereinheit 54C weist ferner erste und zweite Anschlüsse 540A-540B auf, wobei der erste Anschluss 540A mit dem ersten Steuergerät 54A und der zweite Anschluss 540B mit dem zusätzlichen Steuergerät 54B verbunden sind. Demnach ist die Steuereinheit 54C insbesondere einerseits mit dem ersten Steuergerät 54A und andererseits mit dem zusätzlichen Steuergerät 54B fluidleitend verbunden.

Die Steuereinheit 54C umfasst zum Einleiten des Fluids zur zweiten Stellseite 312 des jeweiligen Stellantriebs 310 wenigstens ein, insbesondere fluidisch betätigbares und/oder entsperrbares, selbstsperrendes erstes Hydraulikelement 542 und wenigstens ein schaltbares zweites Hydraulikelement 543, wobei das erste Hydraulikelement 542 mit wenigstens einem der ersten Anschlüsse 540A und das zweite Hydraulikelement 543 mit dem jeweils anderen ersten Anschluss 540B verbunden ist. Das erste Hydraulikelement 542 kann hierbei von dem ersten Steuergerät 54A kommend durchströmt werden, während eine hierzu entgegengesetzte Durchflussrichtung, je nach Betätigung und/oder dem Schaltzustand, durch das erste Hydraulikelement 542 für das Fluid gesperrt ist. Ein anderer erster Anschluss 541 A der Steuereinheit 54C ist dem zweiten Hydraulikelement 543 betätigungsseitig zugeordnet, so dass das zweite Hydraulikelement 543, insbesondere für eine freigegebene Durchflussstellung, durch das über die erste Fluidleitung 610A zubringbare Fluid und/oder den Fluiddruck, betätigbar bzw. umschaltbar ist. Ist das innerhalb der ersten Fluidleitung 610A befindliche Fluid hingegen zumindest in etwa drucklos, wird das zweite Hydraulikelement 543 federbetätigt, insbesondere in Sperrstellung, zurückgeschaltet.

Das erste und zweite Hydraulikelement 542, 543 sind darüber hinaus über wenigstens eine hydraulische Zusatzsteuerleitung 544, insbesondere eine Zwischenleitung, fluid- und/oder druckleitend miteinander verbunden. Mittels der Zusatzsteuerleitung 544 ist sowohl das erste Hydraulikelement 542 als auch das zweite Hydraulikelement 543 über die erste Fluidleitung 610A betätigbar. Ist das erste Hydraulikelement 542 durch das Fluid und/oder durch den über die erste Fluidleitung 610A beaufschlagbaren Druck betätigt, ist das erste Hydraulikelement 542 dazu eingerichtet, den Durchfluss für das Fluid aus der zweiten Stellseite 312 des Stellantriebs 310 kommend in der eigentlichen Sperrrichtung des ersten Hydraulikelements 542 freizugeben, so dass der Stellantrieb 310 der zweiten Arbeitseinheit 30 einfahren und die Nichtarbeitsstellung angefahren werden kann. Während dem Einfahren des Stellantriebs 310 der zweiten Arbeitseinheit 30 wird das Fluid aus dem ersten Anschluss 540A über die zweite Fluidleitung 611A ausgeleitet.

Vor dem zweiten Hydraulikelement 543 und zwischen den beiden zweiten Anschlüssen 540A, 540B ist des Weiteren ein Druckbegrenzungsventil 545 angeordnet, welches dazu eingerichtet ist, den Druck des über das zusätzliche Steuergerät 54B zubringbaren Fluids für die Steuereinheit 54C einzustellen und/oder zu beeinflussen.

Die zweite Stellseite 312 der jeweiligen Stellantriebe 310 ist demnach stets nur über die, insbesondere integrierte, Steuereinheit 54C mit Druck beaufschlagbar, wobei der Druck bzw. das Fluid je nach Bedarf bzw. benötigter Stellung der Arbeitseinheiten 20, 30 über das erste oder zusätzliche Steuergerät 54A,54B zur Steuereinheit 54C zubringbar ist. Darüber hinaus ist das Fluid für eine Schnellbefüllung bzw. einen besonders schnellen Druckaufbau der Steuereinheit 54C auch aus dem ersten und zusätzlichen Steuergerät 54A, 54B zumindest zweitweise gleichzeitig einleitbar.

Weiterhin ist ein zwischen dem zweiten Anschluss 540B und dem Druckregelventil 545 angeordnetes erstes Rückschlagventil 546 zu erwähnen, welches innerhalb er Steuereinheit 54C angeordnet ist. Das erste Rückschlagventil 546 ist dabei zum Druckregelventil 545 fluidisch parallel geschaltet, wobei das Rückschlagventil 546 in einer zum Druckregelventil 545 korrespondierenden Durchflussrichtung für das Fluid gesperrt, insbesondere selbstsperrend, ist. Somit ist erreicht, dass das Fluid bei einer zumindest nahezu druckentlasteten Steuereinheit 54C zumindest zeitweise für eine Schnellbefüllung über die vierte Fluidleitung 611B befüllbar ist. Anders herum ist durch das erste Rückschlagventil sichergestellt, dass bei einer mit Druck beaufschlagten Steuereinheit 54C, das Fluid und/oder der Druck zumindest nahezu ausschließlich über das parallel geschaltete Druckregelventil 545 aus der Steuereinheit 54C ausgeleitet wird.

Innerhalb der Steuereinheit 54C und dem zweiten Leitungskreislauf 61B und dabei vor dem Druckregelventil 545 und/oder dem ersten Rückschlagventil 546 sind ferner ein zweites Rückschlagventil 547 und ein Strömungsregelventil 548 angeordnet. Das zweite Rückschlagventil 547 und das Strömungsregelventil 548 sind zusätzlich ausgehend vom zweiten Anschluss 540b in Richtung des Druckregelventil 545 und/oder dem ersten Rückschlagventil 546 in Reihe angeordnet. Das Strömungsregelventil 548 ist insbesondere nach Art einer einstellbaren Drossel und/oder Blende ausgeführt und dazu eingerichtet, eine von der dritten Fluidleitung 610B bzw. vor dem Gebläse 13 abgezweigte Druchflussmenge des Fluids für die Steuereinheit 54C und damit die zweite Arbeitseinheit 30 bedarfsgerecht zu beeinflussen und/oder anzupassen. Das dem Strömungsregelventil 548 nachgeordnete zweite Rückschlagventil 547 ist hierbei dazu eingerichtet, das über das Strömungsregelventil 548 einleitbare Fluid zum Druckregelventil 545 und/oder zur zweiten Arbeitseinheit 30, insbesondere zur zweiten Stellseite 312, passieren zu lassen und in einer dazu entgegengesetzten Durchflussrichtung zu sperren. Durch das zweite Rückschlagventil 547 ist unter anderem sichergestellt, dass bei einer Druckbeaufschlagung der Steuereinheit 54C über den ersten Anschluss 540A, zumindest nahezu kein Fluid über den zweiten Anschluss 540B zum zusätzlichen Steuergerät 54B durchgeleitet werden kann.

Des Weiteren ist innerhalb der Steuereinheit 54C ein drittes Rückschlagventil 549 zu sehen, welches zwischen dem ersten und zweiten Anschluss 540A, 540B angeordnet ist. Das dritte Rückschlagventil 549 ist dabei zusätzlich fluidisch parallel zum zweiten Hydraulikelement 543 geschaltet bzw. angeordnet. Die Druchflussrichtung für das Fluid ist dabei ausgehend vom ersten Anschluss 540A und/oder der zweiten Stellseite 312 in Richtung des zweiten Anschlusses 540B und/oder des Druckregelventils 545 freigegeben. In einer dazu entgegengesetzten Durchflussrichtung ist der Durchfluss für das Fluid durch das dritte Rückschlagventil 549 gesperrt. Somit ist auch das über das erste Steuergerät 54A zur Steuereinheit 54C zugebrachte Fluid und/oder der von der Druckversorgungseinrichtung 50 eingestellte Druck des Fluids über das Druckregelventil 545 bzw. Druckbegrenzungsventil der Steuereinheit 54C zusätzlich beeinflussbar und/oder anpassbar. Mittels einer derartigen Anordnung ist der Druck an der zweiten Stellseite 312 des Stellantriebs 310 stets über das Druckregelventil 545 beeinflussbar und/oder anpassbar, unabhängig davon durch welchen Anschluss 540A, 540B und/oder welches Steuergerät 54A, 54B das Fluid eingeleitet und/oder zugebracht wird.

Ferner ist an der Steuereinheit 54C zwischen dem ersten und zweiten Anschluss 540A, 540B, insbesondere zwischen dem ersten Hydraulikelement 542 und dem dritten Rückschlagventil 549, eine Druckerfassungs- und/oder Druckanzeigeeinrichtung 550 angeordnet. Mittels der Druckerfassungs- und/oder Druckanzeigeeinrichtung 550 ist der an der zweiten Stellseite 312 anstehende Druck des Fluids beispielsweise von einem Bediener ablesbar und zur Einstellung und/oder Nachregulierung des Druckregelventils 545 verwendbar. Alternativ oder zusätzlich kann die Druckerfassungs- und/oder Druckanzeigeeinrichtung 550 auch in elektronischer Weise, insbesondere mittels einem zugeordneten Steuer- und/oder Regelsystems, mit dem Druckregelventil 545 gekoppelt sein, wobei das Druckregelventil 545 dabei in automatisierter Weise auf einen definierten Druck einstellbar ist.

Die in diesem Ausführungsbeispiel gezeigte Steuereinheit 54C ist Art eines geschlossenen Steuerblocks ausgeführt, bei welcher die fluidischen, insbesondere hydraulischen und/oder pneumatischen, Komponenten, wie beispielsweise die Hydraulikelemente 542, 543, das Druckregelventil 545 und/oder die Rückschlagventile 546, 547, 549, in der Steuereinheit 54B bzw. den Steuerblock integriert sind. Alternativ dazu kann die Steuereinheit 54C auch teilaufgelöst oder vollaufgelöst sein, bei dem zumindest einige dieser Komponenten in weiteren Steuerblöcken oder einzeln innerhalb der hydraulischen und/oder pneumatischen Einrichtung 60 angeordnet sein können.

Zwischen der Steuereinheit 54C und den Stellantrieben 310, insbesondere der zweiten Stellseite 312, ist weiterhin ein optionales, insbesondere manuell betätigbares, Steuer- bzw. Sperrventil 547 angeordnet, welches dazu eingerichtet ist, die Zubringung des Fluids aus der Steuereinheit 54C manuell und/oder je nach Bedarf zu sperren und/oder freizugeben. Alternativ oder zusätzlich kann sowohl das optionale Steuer- bzw. Sperrventil 547 und/oder das Schaltventil 42 fernbetätigt, insbesondere elektrisch, betätigbar sein.

Eine derartige erfindungsgemäße Ausführung der hydraulischen und/oder pneumatischen Einrichtung 60 der Verteilmaschine 10 erlaubt es die unterschiedlichen Arbeitseinheiten 20, 30 in unterschiedlichen Betriebsstellungen zu betreiben ohne die Anzahl an druckversorgungsseitiger, insbesondere Schlepperseitiger, Steuergeräte 54A, 54B zu erhöhen. Somit kann beispielsweise die erste Arbeitseinheit 20 in einer zumindest nahezu drucklosen Schwimmstellung betrieben werden, während die zweite Arbeitseinheit 30 mit eingestelltem Druck gegen den Boden angedrückt wird.

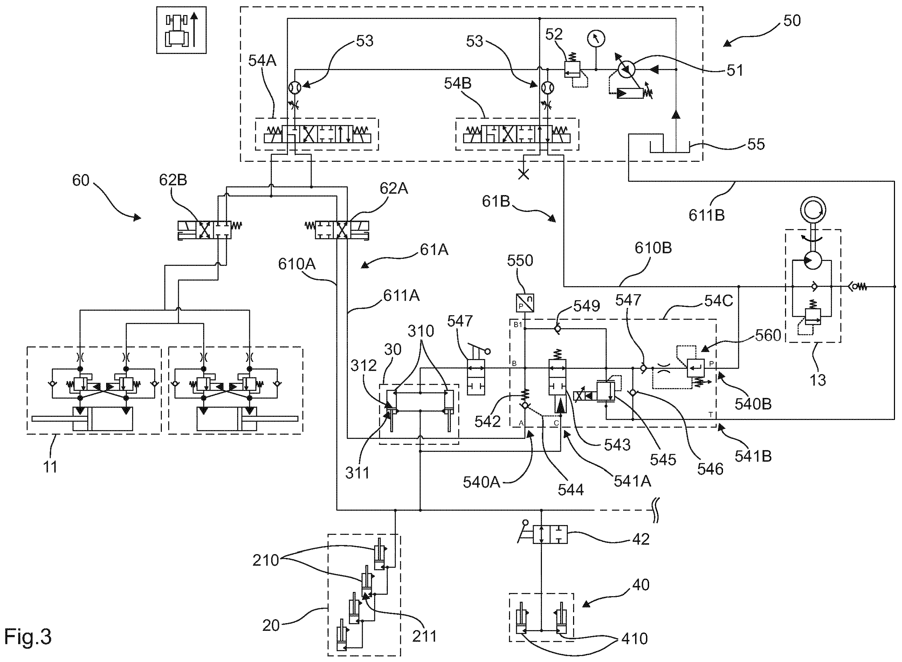

Eine beispielhafte alternative erfindungsgemäße Ausführungsform der Steuereinheit 54C ist außerdem in der Fig.3 gezeigt. Diese unterscheidet sich zu der zuvor beschriebenen Ausführungsform insbesondere dadurch, dass anstelle des zweiten Rückschlagventils 547 und dem Stromregelventil 548 eine Druckwaage 560 bzw. ein Differenzdruckventil oder Druckdifferenzventil angeordnet ist. Dies hat den Vorteil, dass alternativ oder zusätzlich zum ersten Ausführungsbeispiel eine zumindest im Wesentlichen feste Durchflussmenge für das in die Steuereinheit 54C über den zweiten Anschluss 540B einleitbare Fluid einstellbar ist. Die so einstellbare Durchflussmenge des Fluids ist somit zumindest nahezu unabhängig von der zum Gebläse geförderten Durchflussmenge des Fluids. Zusätzlich ist hierbei auch das Druckregelventil 545 in elektronischer Weise einstellbar, womit sich diese Ausführungsform besonders gut für eine Automation zur, insbesondere selbsttätigen, Einstellung des an der zweiten Stellseite 312 anliegenden Drucks des Fluids eignet.

Alternativ oder zusätzlich kann der Verteilmaschine 10, insbesondere dem Maschinenrahmen 11 und/oder zumindest einer Arbeitseinheit 20, 30, zumindest ein Arbeitsstellungs- und/oder Werkzeugpositionssensor zugeordnet sein, welcher dazu eingerichtet ist, eine aktuelle Betriebsstellung des Maschinenrahmens 11 und/oder der zumindest einen Arbeitseinheit 20, 30, insbesondere zumindest eines Bodenbearbeitungswerkzeugs 21, 31, zu erfassen. Ein der Verteilmaschine 10 zugeordnetes Steuer- und/oder Regelsystem ist in diesem Ausführungsbeispiel ferner dazu eingerichtet, die elektronisch ansteuerbare Druckwaage 560 in Abhängigkeit der vom Arbeitsstellungs- und/oder Werkzeugpositionssensor erfassten Betriebsstellung zu steuern und/oder zu regeln. Alternativ oder zusätzlich zum Arbeitsstellungs- und/oder Werkzeugpositionssensor kann auch die elektronische Druckerfassungs- und/oder Druckanzeigeeinrichtung 550 in Förderrichtung, insbesondere unmittelbar, hinter der Druckwaage 560 angeordnet sein und signalübertragend mit dem Steuer- und/oder Regelsystem verbunden sein. Das Steuer- und/oder Regelsystem wäre bei dieser alternativen und/oder zusätzlichen Ausführungsform dazu geeignet, die Druckwaage 560 in Abhängigkeit einer aktuellen von der Druckerfassungs- und/oder Druckanzeigeeinrichtung 550 erfassten Durchflussmenge des Fluids einzustellen.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in den Figuren gezeigte Geometrien nur beispielhaft sind und auch in beliebigen anderen Ausgestaltungen möglich sind.

### Bezugszeichenliste

- 10: landwirtschaftliche Verteilmaschine
- 11: Maschinenrahmen
- 12: Vorratsbehälter
- 13: Gebläse
- 14: Förderleitung
- 15: Verteileinrichtung
- 150: Ausbringleitung
- 20: erste Arbeitseinheit
- 21, 31: Bodenbearbeitungswerkzeug
- 210, 310: Stellantrieb
- 211: Stellseite
- 22: Tiefenführungsrolle
- 30: zweite Arbeitseinheit
- 311: erste Stellseite
- 312: zweite Stellseite
- 40: Aggregat
- 410: Stellantrieb
- 42: Schaltventil
- 50: Druckversorgungseinrichtung
- 51: Fördervorrichtung
- 52: Druckbegrenzungseinrichtung
- 53: Durchflussmess- und/oder Druchflussregeleinrichtung
- 54A: erstes Steuergerät
- 54B: zusätzliches Steuergerät
- 54C: Steuereinheit
- 540A, 541A: erster Anschluss
- 540B: zweiter Anschluss
- 542: erstes Hydraulikelement
- 543: zweites Hydraulikelement
- 544: Zusatzsteuerleitung
- 545: Druckbegrenzungsventil
- 546: erstes Rückschlagventil
- 547: zweites Rückschlagventil
- 548: Strömungsregelventil
- 549: drittes Rückschlagventil
- 55: Fluidtank
- 550: Druckerfassungs- und/oder Druckanzeigeeinrichtung
- 560: Druckwaage
- 60: hydraulische und/oder pneumatische Einrichtung
- 61A: erster Leitungskreislauf
- 610A - 611B: Fluidleitung
- 61B: zweiter Leitungskreislauf
- 62A: erstes Steuerventil
- 62B: zweites Steuerventil

- F: Fahrtrichtung
- N: Nutzfläche, Boden
- Z: Zugfahrzeug

## Patentansprüche

1. Landwirtschaftliche Verteilmaschine (10) zum Ausbringen von granularen Materialien auf einer landwirtschaftlichen Nutzfläche (N), umfassend;
- zumindest einen Maschinenrahmen (11);
- zumindest eine erste und zweite Arbeitseinheit (20, 30) mit jeweils wenigstens einem oder einer Mehrzahl von Bodenbearbeitungswerkzeugen (21, 31), welche an dem Maschinenrahmen (11) angeordnet und jeweils in unterschiedlichen Betriebsstellungen betreibbar sind, und welche jeweils mit einstellbarem Druck gegen einen Boden der Nutzfläche (N) andrückbar sind;
- zumindest ein Gebläse (13) zum pneumatischen Fördern der granularen Materialien, ausgehend von wenigstens einem der Verteilmaschine (10) zugeordneten Vorratsbehälter (12) und/oder entlang wenigstens einer Förderleitung für das granulare Material;
- zumindest eine zugeordnete Druckversorgungseinrichtung (50) zum bedarfsgerechten Bereitstellen und/oder Fördern eines hydraulischen und/oder pneumatischen Fluids;
- zumindest eine fluidleitende hydraulische und/oder pneumatische Einrichtung (60) mit wenigstens einem Leitungskreislauf (61A, 61B) für das Fluid; und
- zumindest ein der ersten Arbeitseinheit (20) zugeordnetes erstes fluidisches Steuergerät (54A) und zumindest ein dem Gebläse (13) zugeordnetes zusätzliches fluidisches Steuergerät (54B), wobei das Fluid zum Betreiben und/oder Anpassen der Betriebsstellungen über die hydraulische und/oder pneumatische Einrichtung (60) und das jeweilige zugeordnete Steuergerät (54A, 54B) bedarfsgerecht zur ersten Arbeitseinheit (20) und/oder zum Gebläse (13) zubringbar ist,
wobei der zweiten Arbeitseinheit (30) wenigstens eine fluidische, insbesondere hydraulische und/oder pneumatische, Steuereinheit (54C) zugeordnet ist, welche entlang des wenigstens einen Leitungskreislaufs (61A, 61B), insbesondere in einer Förder- bzw. Durchflussrichtung des Fluids, dem ersten und/oder zusätzlichen Steuergerät (54A, 54B) nachgeordnet ist und das Fluid, insbesondere wahlweise, über das erste und/oder zusätzliche Steuergerät (54A, 54B) zu der Steuereinheit (54C) zubringbar ist, wobei die unterschiedlichen Arbeitseinheiten (20, 30) während des Betriebs in bzw. mit unterschiedlichen und/oder voneinander abweichenden Betriebsstellungen und Drücken betreibbar sind,
**dadurch gekennzeichnet, dass** die Steuereinheit (54C) einerseits mit dem ersten Steuergerät (54A) und andererseits mit dem zusätzlichen Steuergerät (54B) fluidleitend gekoppelt ist.

2. Verteilmaschine (10) nach Anspruch 1, **dadurch gekennzeichnet, dass** die Steuereinheit (54C) wenigstens einen ersten Anschluss (540A) und wenigstens einen zweiten Anschluss (540B) umfasst, wobei der wenigstens eine erste Anschluss (540A) mit dem ersten Steuergerät (54A) und der wenigstens eine zweite Anschluss (540B) mit dem zusätzlichen Steuergerät (54B) fluidleitend verbunden ist.

3. Verteilmaschine (10) nach Anspruch 2, **dadurch gekennzeichnet, dass** wenigstens einem oder mehreren Bodenbearbeitungswerkzeugen (31) der zweiten Arbeitseinheit (30) wenigstens ein doppeltwirkender Stellantrieb (310) mit unterschiedlichen Stellseiten (311, 312) zugeordnet ist, wobei eine erste Stellseite (311) des jeweiligen Stellantriebs (310) über das erste Steuergerät (54A) und eine zweite Stellseite (312) des jeweiligen Stellantriebs (310), insbesondere alternativ oder zusätzlich, über die Steuereinheit (54C) mit Druck beaufschlagbar ist.

4. Verteilmaschine (10) nach Anspruch 3, **dadurch gekennzeichnet, dass** die Steuereinheit (54C) zum Ein- und/oder Ausleiten des Fluids wenigstens ein, insbesondere zwischen dem ersten und zweiten Anschluss (540A,540B) angeordnetes, fluidisch selbstsperrendes erstes Hydraulikelement (542) und wenigstens ein schaltbares zweites Hydraulikelement (543), wobei das erste und zweite Hydraulikelement (542, 543) jeweils betätigungsseitig vorzugsweise über wenigstens eine hydraulische Zusatzsteuerleitung (544), insbesondere Betätigungsleitung, miteinander gekoppelt und/oder, insbesondere dauerhaft, druck- und/oder fluidleitend miteinander verbunden sind.

5. Verteilmaschine (10) nach Anspruch 4, **dadurch gekennzeichnet, dass** die Steuereinheit (54C) zumindest ein, vorzugsweise zwischen dem zusätzlichen Steuergerät (54B) und dem schaltbaren zweiten Hydraulikelement (543) angeordnetes, Druckregelventil umfasst, wobei der Druck an der zweiten Stellseite (312) des wenigstens einen Stellantriebs (310), insbesondere alternativ oder zusätzlich, mittels des Druckregelventils einstellbar und/oder beinflussbar ist.

6. Verteilmaschine (10) nach Anspruch 5, **dadurch gekennzeichnet, dass** die Steuereinheit (54C) zumindest ein erstes Rückschlagventil (546) umfasst, welches bevorzugt in einer Förderrichtung des Fluids zwischen dem zweiten Anschluss (540B) und dem Druckregelventil der Steuereinheit (54C) angeordnet ist, und besonders bevorzugt zum Druckregelventil fluidisch parallel geschaltet ist, und welches insbesondere in Förderrichtung des Fluids selbstsperrend ist.

7. Verteilmaschine (10) nach zumindest einem der vorgenannten Ansprüche 4 bis 6, **dadurch gekennzeichnet, dass** die Steuereinheit (54C) zumindest ein zweites Rückschlagventil (547) und zumindest ein Strömungsregelventil (548) umfasst, welche in Förderrichtung zueinander in Reihe und zwischen dem zusätzlichen Steuergerät (54B) und dem zweiten Hydraulikelement (543) angeordnet sind.

8. Verteilmaschine (10) nach zumindest einem der vorgenannten Ansprüche 4 bis 7, **dadurch gekennzeichnet, dass** die Steuereinheit (54C) zumindest ein drittes Rückschlagventil (549) umfasst, welches in Förderrichtung zwischen dem ersten und zweiten Anschluss (540A,540B) und zusätzlich zum zweiten Hydraulikelement (543) fluidisch parallel angeordnet ist, wobei das dritte Rückschlagventil (549) vorzugsweise dazu eingerichtet ist, das Fluid von der zweiten Stellseite (312) des Stellantriebs (310) und/oder dem ersten Anschluss (540A) zum zweiten Anschluss (540B) und/oder zur Druckversorgungseinrichtung (50) hin passieren zu lassen, während ein Druchfluss des Fluids durch das zweite Hydraulikelement (543) hindurch gesperrt ist.

9. Verteilmaschine (10) nach zumindest einem der vorgenannten Ansprüche 3 bis 8, **dadurch gekennzeichnet, dass** die Steuereinheit (54C) je nach einem Schaltzustand des ersten Steuergeräts (54A) und/oder der Steuereinheit (54C) entweder über
- das erste Steuergerät (54A); oder
- das zusätzliche Steuergerät (54B); oder
- vorzugsweise für eine Schnellbefüllung über das erste und zusätzliche Steuergerät (54A, 54B) gemeinsam;
mit dem Fluid befüllbar ist.

10. Verfahren zum Betreiben einer landwirtschaftlichen Verteilmaschine (10), insbesondere einer Verteilmaschine (10) nach zumindest einem der vorgenannten Ansprüche, mit den Schritten:
- Betreiben zumindest einer ersten und zweiten Arbeitseinheit (20, 30) mit jeweils wenigstens einem oder einer Mehrzahl von Bodenbearbeitungswerkzeugen (21, 31), welche an einem Maschinenrahmen (11) der Verteilmaschine (10) angeordnet sind; und/oder
- Anpassen einer Betriebsstellung, insbesondere zwischen einer angehobenen und/oder abgesenkten Betriebsstellung der ersten und zweiten Arbeitseinheit (20, 30);
- Fördern eines auszubringenden granularen Materials aus einem der Verteilmaschine (10) zugeordneten Vorratsbehälter (12) und/oder entlang wenigstens einer Förderleitung für das granulare Material mittels zumindest einem Gebläse (13);
- Bereitstellen und/oder Fördern eines hydraulischen und/oder pneumatischen Fluids mittels einer der Verteilmaschine (10) zugeordneten Druckversorgungseinrichtung (50), wobei das Fluid entlang einer fluidleitenden hydraulischen und/oder pneumatischen Einrichtung (60) der Verteilmaschine (10) mit wenigstens einem Leitungskreislauf (61A, 61B) für das Fluid gefördert wird; und
- Zubringen des Fluids über
∘ zumindest ein der ersten Arbeitseinheit (20) zugeordnetes erstes fluidisches Steuergerät (54A); und
∘ zumindest ein dem Gebläse (13) zugeordnetes zusätzliches fluidisches Steuergerät (54B);
wobei zum Betreiben und/oder Anpassen der Betriebsstellungen das Fluid über die hydraulische und/oder pneumatische Einrichtung (60) und über die jeweils zugeordneten Steuergeräte (54A, 54B) zu der ersten Arbeitseinheit und das Gebläse (13) zugebracht wird;
- Betreiben der ersten und zweiten Arbeitseinheit (20, 30) in zueinander unterschiedlichen Betriebsstellungen und Drücken;
wobei der zweiten Arbeitseinheit (30) wenigstens eine fluidische, insbesondere hydraulische und/oder pneumatische, Steuereinheit (54C) zugeordnet ist, welche entlang des wenigstens einen Leitungskreislaufs (61A, 61B), insbesondere in einer Förder- bzw. Durchflussrichtung des Fluids, dem ersten und/oder zusätzlichen Steuergerät (54A, 54B) nachgeordnet ist,
**dadurch gekennzeichnet, dass**
die Steuereinheit (54C) einerseits mit dem ersten Steuergerät (54A) und andererseits mit dem zusätzlichen Steuergerät (54B) fluidleitend verbunden ist.

## Claims

1. Agricultural distribution machine (10) for spreading granular materials on an agricultural area (N), comprising;
- at least one machine frame (11);
- at least one first and one second working unit (20, 30) each having at least one or a plurality of soil-cultivating tools (21, 31) which are arranged on the machine frame (11) and can each be operated in different operating positions, and which can each be pressed at regulatable pressure against soil of the area (N);
- at least one fan (13) for pneumatically delivering the granular materials, starting from at least one storage container (12) assigned to the distribution machine (10) and/or along at least one delivery line for the granular material;
- at least one assigned pressure supply device (50) for providing and/or delivering a hydraulic and/or pneumatic fluid according to need;
- at least one fluid-conducting hydraulic and/or pneumatic device (60) having at least one conduction circuit (61A, 61B) for the fluid; and
- at least one first fluidic control device (54A) assigned to the first working unit (20) and at least one additional fluidic control device (54B) assigned to the fan (13), wherein, in order to operate and/or adjust the operating positions, the fluid can be fed to the first working unit (20) and/or to the fan (13) according to need via the hydraulic and/or pneumatic device (60) and the relevant assigned control device (54A, 54B),
wherein the second working unit (30) is assigned at least one fluidic, in particular hydraulic and/or pneumatic, control unit (54C) which is downstream of the first and/or additional control device (54A, 54B) along the at least one conduction circuit (61A, 61B), in particular in a delivery or flow direction of the fluid, and the fluid can be fed to the control unit (54C), in particular selectively, via the first and/or additional control device (54A, 54B),
wherein the different working units (20, 30) can be operated during operation in or at different and/or mutually deviating operating positions and pressures,
**characterized in that** the control unit (54C) is fluidically coupled on one side to the first control device (54A) and on the other side to the additional control device (54B).

2. Distribution machine (10) according to claim 1, **characterized in that** the control unit (54C) comprises at least one first connection (540A) and at least one second connection (540B), wherein the at least one first connection (540A) is fluidically connected to the first control device (54A) and the at least one second connection (540B) is fluidically connected to the additional control device (54B).

3. Distribution machine (10) according to claim 2, **characterized in that** at least one or more soil-cultivating tools (31) of the second working unit (30) is assigned at least one double-acting actuator (310) having different actuation sides (311, 312), wherein a first actuation side (311) of the relevant actuator (310) can be pressurized via the first control device (54A) and a second actuation side (312) of the relevant actuator (310) can be pressurized via the control unit (54C), in particular alternatively or additionally.

4. Distribution machine (10) according to claim 3, **characterized in that,** for introducing and/or discharging the fluid, the control unit (54C) at least one first hydraulic element (542) which is in particular arranged between the first and second connection (540A, 540B) and which is fluidically normally off, and at least one switchable second hydraulic element (543), wherein the first and second hydraulic element (542, 543) are each preferably coupled to one another on the actuating side via at least one hydraulic additional control line (544), in particular actuating line, and/or, in particular permanently, connected to one another in a pressure- and/or fluidically connected manner.

5. Distribution machine (10) according to claim 4, **characterized in that** the control unit (54C) comprises at least one pressure control valve, preferably arranged between the additional control device (54B) and the switchable second hydraulic element (543), wherein the pressure at the second actuation side (312) of the at least one actuator (310) can be regulated and/or influenced by means of the pressure control valve, in particular alternatively or additionally.

6. Distribution machine (10) according to claim 5, **characterized in that** the control unit (54C) comprises at least one first non-return valve (546) which is preferably arranged in a delivery direction of the fluid between the second connection (540B) and the pressure control valve of the control unit (54C), and is particularly preferably fluidically connected in parallel with respect to the pressure control valve, and which is in particular normally off in the delivery direction of the fluid.

7. Distribution machine (10) according to at least one of the preceding claims 4 to 6, **characterized in that** the control unit (54C) comprises at least one second non-return valve (547) and at least one flow control valve (548) which are arranged in series with respect to one another in the delivery direction and between the additional control device (54B) and the second hydraulic element (543).

8. Distribution machine (10) according to at least one of the preceding claims 4 to 7, **characterized in that** the control unit (54C) comprises at least one third non-return valve (549) which is arranged fluidically in parallel in the delivery direction between the first and second connection (540A, 540B) and in addition to the second hydraulic element (543), wherein the third non-return valve (549) is preferably designed to allow the fluid to pass from the second actuation side (312) of the actuator (310) and/or from the first connection (540A) to the second connection (540B) and/or to the pressure supply device (50), while preventing the fluid from flowing through the second hydraulic element (543).

9. Distribution machine (10) according to at least one of the preceding claims 3 to 8, **characterized in that** the control unit (54C) can be filled with the fluid either via
- the first control device (54A); or
- the additional control device (54B); or
- for rapid filling, preferably via the first and additional control device (54A, 54B) together;
depending on a switching state of the first control device (54A) and/or the control unit (54C).

10. Method for operating an agricultural distribution machine (10), in particular a distribution machine (10) according to at least one of the preceding claims, comprising the steps of:
- operating at least one first and one second working unit (20, 30), each having at least one or a plurality of soil-cultivating tools (21, 31) which are arranged on a machine frame (11) of the distribution machine (10); and/or
- adjusting an operating position, in particular between a raised and/or lowered operating position of the first and the second working unit (20, 30);
- delivering a granular material to be spread from a storage container (12) assigned to the distribution machine (10) and/or along at least one delivery line for the granular material, by means of at least one fan (13);
- providing and/or delivering a hydraulic and/or pneumatic fluid by means of a pressure supply device (50) assigned to the distribution machine (10), wherein the fluid is delivered along a fluid-conducting hydraulic and/or pneumatic device (60) of the distribution machine (10) having at least one conduction circuit (61A, 61B) for the fluid; and
- feeding the fluid via
∘ at least one first fluidic control device (54A) assigned to the first working unit (20); and
∘ at least one additional fluidic control device (54B) assigned to the fan (13);
wherein, for operating and/or adjusting the operating positions, the fluid is fed to the first working unit and the fan (13) via the hydraulic and/or pneumatic device (60) and via the control devices (54A, 54B) assigned in each case;
- operating the first and the second working unit (20, 30) in operating positions and pressures which are different with respect to one another;
wherein the second working unit (30) is assigned at least one fluidic, in particular hydraulic and/or pneumatic, control unit (54C) which is downstream of the first and/or additional control device (54A, 54B) along the at least one conduction circuit (61A, 61B), in particular in a conveying or flow direction of the fluid,
**characterized in that**
the control unit (54C) is fluidically connected on one side to the first control device (54A) and on the other side to the additional control device (54B).

## Revendications

1. Épandeur (10) agricole pour l'épandage de matériaux granulaires sur une surface agricole utile (N), comprenant ;
- au moins un bâti de machine (11),
- au moins une première et une seconde unité de travail (20, 30) comportant respectivement au moins un ou une pluralité d'outils de travail du sol (21, 31) disposés sur le bâti de machine (11) et pouvant être actionnés respectivement dans différentes positions de fonctionnement, et qui peuvent respectivement être pressés avec une pression réglable contre un sol de la surface utile (N) ;
- au moins une soufflante (13) pour le transport pneumatique des matériaux granulaires à partir d'au moins un réservoir de stockage (12) associé à l'épandeur (10) et/ou le long d'au moins une conduite de transport pour le matériau granulaire ;
- au moins un dispositif d'alimentation en pression (50) associé pour la mise à disposition et/ou le transport d'un fluide hydraulique et/ou pneumatique en fonction des besoins ;
- au moins un dispositif hydraulique et/ou pneumatique (60) conduisant le fluide, comportant au moins un circuit de conduites (61A, 61B) pour le fluide ; et
- au moins un premier appareil de commande (54A) fluidique associé à la première unité de travail (20) et au moins un appareil de commande supplémentaire (54B) fluidique associé à la soufflante (13), dans lequel le fluide, pour le fonctionnement et/ou l'adaptation des positions de fonctionnement, peut être amené à la première unité de travail (20) et/ou à la soufflante (13) en fonction des besoins par l'intermédiaire du dispositif hydraulique et/ou pneumatique (60) et de l'appareil de commande (54A, 54B) respectif associé,
dans lequel au moins une unité de commande (54C) fluidique, en particulier hydraulique et/ou pneumatique, est associée à la seconde unité de travail (30), laquelle unité de commande est disposée en aval du premier appareil de commande et/ou de l'appareil de commande supplémentaire (54A, 54B) le long de l'au moins un circuit de conduites (61A, 61B), en particulier dans une direction de transport ou d'écoulement du fluide, et le fluide peut être amené, en particulier au choix, à l'unité de commande (54C) par l'intermédiaire du premier appareil de commande et/ou de l'appareil de commande supplémentaire (54A, 54B),
dans lequel les différentes unités de travail (20, 30) peuvent fonctionner, pendant le fonctionnement, dans ou avec des positions de fonctionnement et des pressions différentes et/ou distinctes les unes des autres,
**caractérisé en ce que** l'unité de commande (54C) est accouplée d'une manière conductrice de fluide d'une part au premier appareil de commande (54A) et d'autre part à l'appareil de commande supplémentaire (54B).

2. Épandeur (10) selon la revendication 1, **caractérisé en ce que** l'unité de commande (54C) comprend au moins un premier raccord (540A) et au moins un second raccord (540B), dans lequel l'au moins un premier raccord (540A) est raccordé d'une manière conductrice de fluide au premier appareil de commande (54A) et l'au moins un second raccord (540B) est raccordé d'une manière conductrice de fluide à l'appareil de commande supplémentaire (54B).

3. Épandeur (10) selon la revendication 2, **caractérisé en ce qu'**au moins un mécanisme de réglage (310) à double effet comportant différents côtés de réglage (311, 312) est associé à au moins un ou plusieurs outils de travail du sol (31) de la seconde unité de travail (30), dans lequel un premier côté de réglage (311) du mécanisme de réglage (310) respectif peut être alimenté en pression par l'intermédiaire du premier appareil de commande (54A) et un second côté de réglage (312) du mécanisme de réglage (310) respectif peut être alimenté en pression, en particulier alternativement ou en supplément, par l'intermédiaire de l'unité de commande (54C).

4. Épandeur (10) selon la revendication 3, **caractérisé en ce que** l'unité de commande (54C), pour l'introduction et/ou l'évacuation du fluide, au moins un premier élément hydraulique (542) à auto-blocage fluidique, disposé en particulier entre le premier et le second raccord (540A, 540B), et au moins un second élément hydraulique (543) commutable, dans lequel le premier et le second élément hydraulique (542, 543) sont respectivement accouplés l'un à l'autre côté actionnement, de préférence par l'intermédiaire d'au moins une conduite de commande supplémentaire (544) hydraulique, en particulier une conduite d'actionnement, et/ou sont raccordés l'un à l'autre, en particulier de manière permanente, d'une manière conductrice de pression et/ou de fluide.

5. Épandeur (10) selon la revendication 4, **caractérisé en ce que** l'unité de commande (54C) comprend au moins une soupape de régulation de pression, disposée de préférence entre l'appareil de commande supplémentaire (54B) et le second élément hydraulique (543) commutable, dans lequel la pression au niveau du second côté de réglage (312) de l'au moins un mécanisme de réglage (310) peut être réglée et/ou influencée, en particulier alternativement ou en supplément, au moyen de la soupape de régulation de pression.

6. Épandeur (10) selon la revendication 5, **caractérisé en ce que** l'unité de commande (54C) comprend au moins une première soupape anti-retour (546) qui est disposée de préférence dans une direction de transport du fluide entre le second raccord (540B) et la soupape de régulation de pression de l'unité de commande (54C), et qui est de manière particulièrement préférée montée de manière fluidique en parallèle avec la soupape de régulation de pression, et qui est en particulier autobloquante dans la direction de transport du fluide.

7. Épandeur (10) selon au moins l'une des revendications précédentes 4 à 6, **caractérisé en ce que** l'unité de commande (54C) comprend au moins une deuxième soupape anti-retour (547) et au moins une soupape de régulation de débit (548), lesquelles sont disposées en série l'une par rapport à l'autre dans la direction de transport et entre l'appareil de commande supplémentaire (54B) et le second élément hydraulique (543).

8. Épandeur (10) selon au moins l'une des revendications 4 à 7 précitées, **caractérisé en ce que** l'unité de commande (54C) comprend au moins une troisième soupape anti-retour (549) disposée de manière fluidique en parallèle dans la direction de transport entre le premier et le second raccord (540A, 540B) et en supplément du second élément hydraulique (543), dans lequel la troisième soupape anti-retour (549) est de préférence conçue pour laisser passer le fluide du second côté de réglage (312) du mécanisme de réglage (310) et/ou du premier raccord (540A) vers le second raccord (540B) et/ou vers le dispositif d'alimentation en pression (50), tandis que l'écoulement du fluide à travers le second élément hydraulique (543) est bloqué.

9. Épandeur (10) selon au moins l'une des revendications précédentes 3 à 8, **caractérisé en ce que** l'unité de commande (54C) peut être remplie, en fonction d'un état de commutation du premier appareil de commande (54A) et/ou de l'unité de commande (54C), soit par l'intermédiaire
- du premier appareil de commande (54A) ; soit
- de l'appareil de commande supplémentaire (54B) ; soit
- de préférence pour un remplissage rapide, conjointement par l'intermédiaire du premier appareil de commande et de l'appareil de commande supplémentaire (54A, 54B) ;
de fluide.

10. Procédé permettant de faire fonctionner un épandeur (10) agricole, en particulier un épandeur (10) selon l'une des revendications précédentes, comportant les étapes consistant à :
- faire fonctionner au moins une première et une seconde unité de travail (20, 30) comportant respectivement au moins un ou une pluralité d'outils de travail du sol (21, 31) disposés sur un bâti de machine (11) de l'épandeur (10) ; et/ou
- adapter une position de fonctionnement, en particulier entre une position de fonctionnement relevée et/ou abaissée, de la première et de la seconde unité de travail (20, 30) ;
- transporter un matériau granulaire à épandre à partir d'un réservoir de stockage (12) associé à l'épandeur (10) et/ou le long d'au moins une conduite de transport pour le matériau granulaire au moyen d'au moins une soufflante (13) ;
- mettre à disposition et/ou transporter un fluide hydraulique et/ou pneumatique au moyen d'un dispositif d'alimentation en pression (50) associé à l'épandeur (10), dans lequel le fluide est transporté le long d'un dispositif hydraulique et/ou pneumatique (60) conduisant le fluide de l'épandeur (10) et comportant au moins un circuit de conduites (61A, 61B) pour le fluide ; et
- amener le fluide par l'intermédiaire
∘ d'au moins un premier appareil de commande (54A) fluidique associé à la première unité de travail (20) ; et
∘ d'au moins un appareil de commande supplémentaire (54B) fluidique associé à la soufflante (13) ;
dans lequel le fluide, pour le fonctionnement et/ou l'adaptation des positions de fonctionnement, est amené à la première unité de travail et à la soufflante (13) par l'intermédiaire du dispositif hydraulique et/ou pneumatique (60) et par l'intermédiaire des appareils de commande (54A, 54B) respectivement associés ;
- faire fonctionner la première et la seconde unité de travail (20, 30) dans des positions de fonctionnement et à des pressions différentes l'une de l'autre ;
dans lequel au moins une unité de commande (54C) fluidique, en particulier hydraulique et/ou pneumatique, est associée à la seconde unité de travail (30), laquelle unité de commande est disposée en aval du premier appareil de commande et/ou de l'appareil de commande supplémentaire (54A, 54B) le long de l'au moins un circuit de conduites (61A, 61B), en particulier dans une direction de transport ou d'écoulement du fluide, **caractérisé en ce que**
l'unité de commande (54C) est raccordée d'une manière conductrice de fluide d'une part au premier appareil de commande (54A) et d'autre part à l'appareil de commande supplémentaire (54B).
